# EUROPÄISCHE PATENTSCHRIFT

(11) **EP 0 637 531 B1**
(45) Veröffentlichungstag und Bekanntmachung des Hinweises auf die Patenterteilung: **20.11.1996**
(21) Anmeldenummer: 94110514.0
(22) Anmeldetag: 06.07.1994
(51) Int. Cl.: B60S 3/04

(54) **Vorrichtung zum Reinigen eines Zweirades, insbesondere eines Fahrrades**
Apparatus for cleaning a two-wheeled vehicle, especially a bicycle
Dispositif de nettoyage pour véhicules à deux roues, notamment pour bicyclettes

(30) Priorität: 03.08.1993 DE 4325973
(43) Veröffentlichungstag der Anmeldung: 08.02.1995
(73) Patentinhaber: Hochmuth, Walter, D-90431 Nürnberg (DE)
(72) Erfinder: Hochmuth, Walter, D-90431 Nürnberg (DE)
(74) Vertreter: Matschkur, Götz, Lindner Patent- und Rechtsanwälte

(56) Entgegenhaltungen:
- DE-U- 9 112 116
- DE-U- 9 208 442
- US-A- 2 390 017
- US-A- 2 854 680

## Beschreibung

Die Erfindung betrifft eine Vorrichtung zum Reinigen eines Zweirades, insb. eines Fahrrades, mit einer das Zweirad wenigstens seitlich und oberhalb umschließenden Kabine, in der eine eine Sprüh- und/oder Trocknungseinrichtung beinhaltende Reinigungseinrichtung angeordnet ist.

Reinigungsvorrichtungen für Zweiräder sind beispielsweise aus EP 0 222 861 bekannt, in welcher eine Reinigungskabine beschrieben ist, in die das zu reinigende Zweirad eingestellt wird. Die Reinigung erfolgt durch mittels an den Seitenwänden der Kabine und somit seitlich des Zweirades angeordneten Düsen, mittels welchen Waschflüssigkeit auf das Zweirad gesprüht wird. Der Reinigungseffekt beruht folglich lediglich auf der mit Druck aufgesprühten Waschflüssigkeit, die, da die Düsen ortsfest angeordnet sind, während des Reinigungsvorganges fortwährend auf die selben Stellen gesprüht wird. Eine Entfernung von festsitzendem Schmutz, beispielsweise Schmiere oder Öl, oder von erschwert zugänglichen Verunreinigungen ist mit einer derartigen Anordnung folglich nicht möglich, so daß der Reinigungseffekt minderwertig ist. Gleiches gilt für die in G 91 12 116.7 beschriebene Vorrichtung, bei der die Reinigung ebenfalls lediglich durch mittels Düsen aufgesprühte Waschflüssigkeit erfolgt, wobei jedoch die Düsen an den Kabinenseitenwänden rotierend gelagert sind. Zwar wird mit dieser Anordnung die Reinigungsflüssigkeit mehr oder weniger gleichmäßig auf das Fahrzeug gesprüht, jedoch ist auch hier eine Entfernung von festsitzendem Schmutz nicht möglich, eine vollständige Reinigung läßt sich nicht erzielen.

Der Erfindung liegt somit die Aufgabe zugrunde, eine Reinigungsvorrichtung zu schaffen, mittels welcher ein zu reinigendes Zweirad vollständig und von jedweder Verschmutzung gereinigt werden kann, auch wenn die Verschmutzung festhaftend oder erschwert zugänglich ist.

Zur Lösung der Aufgabe ist bei einer Vorrichtung mit den eingangs genannten Merkmalen erfindungsgemäß vorgesehen, daß die Reinigungseinrichtung wenigstens zwei beidseitig des Zweirades positionierte, rotierbare bürstenartige Reinigungswalzen mit den Reinigungswalzen zugeordneten Sprüh- und/oder Trocknungseinrichtungen umfaßt, die gemeinsam mittels eines auf einer parallel zur Zweiradlängsachse verlaufenden Längsschiene bewegbaren Schlittens seitlich entlang des Zweirades verfahrbar sind.

Bei einer derartigen Anordnung erfolgt die Reinigung durch einen zweigeteilten Reinigungseffekt. Zum einen wird der nur leichtsitzende Schmutz bereits während der Ansprühphase gelöst, zumindest jedoch aufgeweicht, so daß er dann einfachst von den rotierenden Bürstenwalzen abgebürstet werden kann. Die Bürsten samt den zugeordneten Sprüh- und/oder Trocknungseinrichtungen werden während des Reinigungsvorganges an dem zu reinigenden Zweirad vorbeibewegt, so daß die Bürsten an jeder Stelle des Zweirades reinigend angreifen können und so eine vollständige Entfernung auch festsitzenden Schmutzes gewährleistet ist. Die Effizienz dieses Reinigungsvorganges kann noch weiter erhöht werden, wenn, wie in Weiterbildung der Erfindung vorgesehen sein kann, die Sprüh- und/oder Trocknungseinrichtungen beidseitig der Reinigungswalzen angeordnet sind, da dann beispielsweise von der vorlaufenden Sprüheinrichtung die Waschflüssigkeit aufgesprüht werden kann, und nachfolgend die Bürstenwalzen ihre Reingigungswirkung an den bereits vorgereinigten Bereichen entfalten können. Mittels der nachlaufenden Sprüheinrichtung kann dann vorteilhaft eine Nachreinigung der behandelten Bereiche zur Entfernung der Waschflüssigkeit erfolgen, oder es kann eine Trocknungseinrichtung nachgeschaltet sein, so daß mit besonderem Vorteil die gereinigten Bereiche sofort getrocknet werden und das Zweirad während eines einzigen Durchlaufes vollständig gereinigt und getrocknet ist.

Die Reinigungswalzen sind an einem Schlitten, der auf einer Längsschiene verfahrbar ist, angeordnet und können so einfachst entlang des Zweirades verfahren werden, wobei die Längsschiene, wie im Rahmen der Erfindung vorgesehen sein kann, oberhalb des Zweirades verläuft, welches in einer in der Kabine angeordneten Einhängevorrichtung hängend angeordnet ist. Bei einer derartigen Anordnung der Längsschiene oberhalb des Zweirades erstrecken sich die Reinigungswalzen seitlich von oben nach unten bis wenigstens an die Räderunterkante des oberhalb des Bodens hängenden Zweirades, so daß der Boden eine ebene oder leicht geneigte Fläche ohne irgendwelche den Abfluß der Waschflüssigkeit behindernden Teile darstellt. Jedoch kann die Längsschiene auch unterhalb des Zweirades auf dem Boden angeordnet verlaufen, so daß sich die am Schlitten befestigten Reinigungswalzen seitlich des Zweirades von unten nach oben erstrecken, wobei das Zweirad selbst wiederum entweder an einer Einhängevorrichtung hängend angeordnet ist oder aber beispielsweise bodenseitig befestigt ist.

Infolge der unterschiedlichen Breite des zu reinigenden Zweirades, beispielsweise im Lenker- oder Pedalbereich eines Fahrrades, müssen die Reinigungswalzen ausreichend beweglich am Schlitten befestigt sein, so daß, wenn die Reinigungswalzen bis zu einem entsprechend breiten Zweiradbereich verschoben sind, eine Bewegung der Reinigungswalzen dahingehend möglich ist, daß sie sich der sich ändernden Breite des Zweiradbereiches anpassen, so daß ein Anschlagen und damit ein Verschieben des Zweirades oder ein Verklemmen der Reinigungswalzen durch die Bewegung der Reinigungswalzen verhindert wird. Deshalb kann in Weiterbildung des Erfindungsgedankens vorgesehen sein, daß die Reinigungswalzen und/oder die Sprüh- und/oder Trocknungseinrichtungen mit einer Gelenkverbindung an dem Schlitten angelenkt sind. Durch eine derartige Gelenkverbindung können die Reinigungswalzen bei Erreichen eines entsprechend verbreiterten Bereiches des Zweirades während ihrer Rotation um die Anlenkachse nach außen schwenken, so daß sie sich automatisch den gegebenen Verhältnissen anpassen. Als Alternativlösung zu der schwenkbaren Anordnung der Reinigungswalzen kann auf der Basis der Erfindung vorgesehen sein, daß die Reinigungswalzen und/oder die Sprüh- und/oder Trocknungseinrichtungen mittels auf einer Querschiene des Schlittens bewegbarer Querschlitten senkrecht zur Bewegungsrichtung des Schlittens verfahrbar sind. Die Reinigungswalzen sind dabei starr an den verfahrbaren Querschlitten angeordnet, die Anpassung des Abstandes der Reinigungswalzen an die sich ändernde Breite des Zweirades erfolgt mit besonderem Vorteil durch Verfahren der Querschlitten auf der Querschiene, bis der Abstand der Reinigungswalzen entsprechend eingestellt ist.

Um auch an für die Reinigungswalzen unzugänglichen Stellen befindlichen Schmutz entfernen zu können, kann im Rahmen der Erfindung vorgesehen sein, daß in der Kabine wenigstens ein Reinigungsflüssigkeit abgebendes Handreinigungsgerät, insb. eine Bürste, angeordnet ist und ferner, daß in der Kabine wenigstens ein Handtrocknungsgerät, insbesondere ein Gebläse, angeordnet ist, um damit die von Hand gereinigte Stelle trocknen zu können.

Um das Einstellen des zu reinigenden Zweirades, was zwar durch die offenen Stirnseiten der Kabine möglich, jedoch umständlich ist, zu erleichtern, kann in Weiterbildung des Erfindungsgedankens ferner vorgesehen sein, daß wenigstens eine der Seitenwände der Kabine vorzugsweise im mittleren Bereich eine Schiebetür aufweist, wobei auch das Dach vorzugsweise im mittleren Bereich erfindungsgemäß als Schiebedach ausgebildet sein kann, so daß die Kabine im mittleren Bereich einfachst durch Beiseiteschieben sowohl der Schiebetür als auch wahlweise des Schiebedaches geöffnet werden kann und das Einstellen des Zweirades wesentlich vereinfacht erfolgen kann. Die seitlichen und oberseitigen Schiebebereiche können vorteilhaft miteinander gekoppelt sein, so daß bei Auf- oder Zuschieben einer Seitenwand auch das Schiebedach und die gegenüberliegende Seitenwand geöffnet oder geschlossen werden.

Weitere Vorteile und Einzelheiten der Erfindung ergeben sich aus dem im folgenden beschriebenen Ausführungsbeispiel sowie anhand der Zeichnungen. Dabei zeigen:
- Fig. 1: eine Seitenansicht der geöffneten Kabine mit eingehängtem Zweirad,
- Fig. 2: eine Aufsicht auf die Kabine in Richtung des Pfeils II aus Fig. 1,
- Fig. 3: eine Vorderansicht der Kabine in Richtung des Pfeils III aus Fig. 1 während des Reinigungsvorganges, und
- Fig. 4: eine teilweise Frontansicht der Kabine mit einer zweiten Ausführungsform der Reinigungseinrichtung.

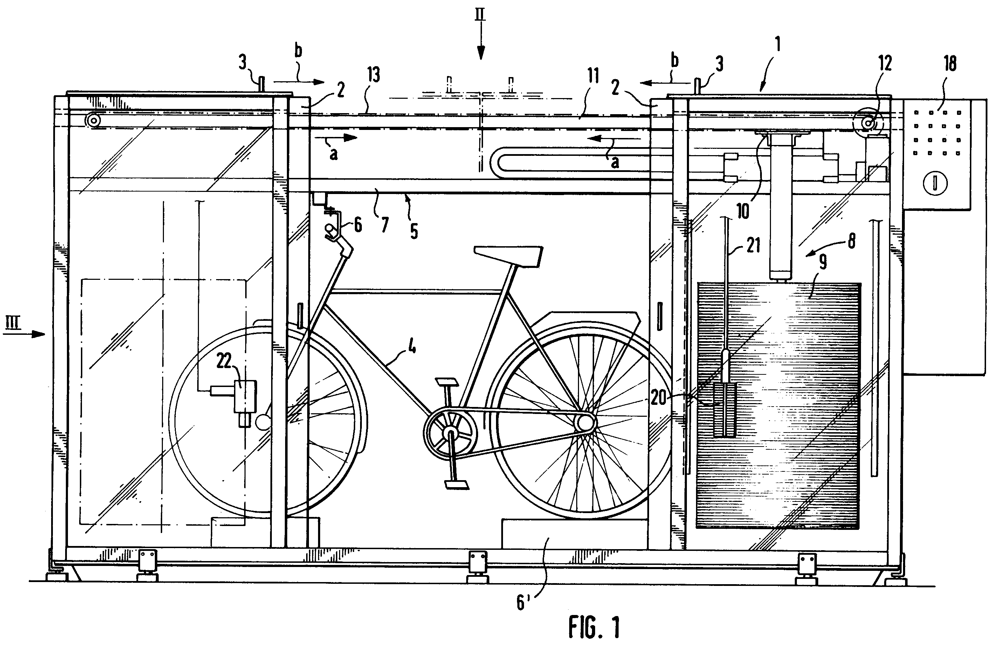

Fig. 1 zeigt eine Kabine 1, deren seitliche Schiebetüren 2 und deren Schiebedachhälften 3 aufgeschoben sind und durch Verschieben in Richtung der Pfeile a, b während des Betriebes geschlossen werden. Je eine Schiebetür 2, die entsprechende Dachhälfte 3 und die gegenüberliegende Schiebetür 2 können derart gekoppelt sein, daß mit Bewegen eines der drei Schiebeteile alle anderen mitbewegt werden. Im Inneren der Kabine 1 befindet sich ein Fahrrad 4, das an einer Einhängevorrichtung 5 eingehängt ist. Die Einhängevorrichtung 5 besteht aus einem oberhalb des Fahrrads 4 im Lenkerbereich an einem Träger 7 angebrachten Haken 6, dem ein weiterer, oberhalb im Sattelbereich angeordneter Haken (nicht dargestellt) oder ein Aufstellpodest 6' für das Hinterrad zugeordnet ist. Neben einer derartigen hängenden Anordnung des Fahrrades 4 ist auch eine bodennahe Befestigung des Fahrrades 4 möglich, beispielsweise durch Anordnung des Trägers 7 am Boden der Kabine 1 und Anbringung von entsprechenden Befestigungselementen.

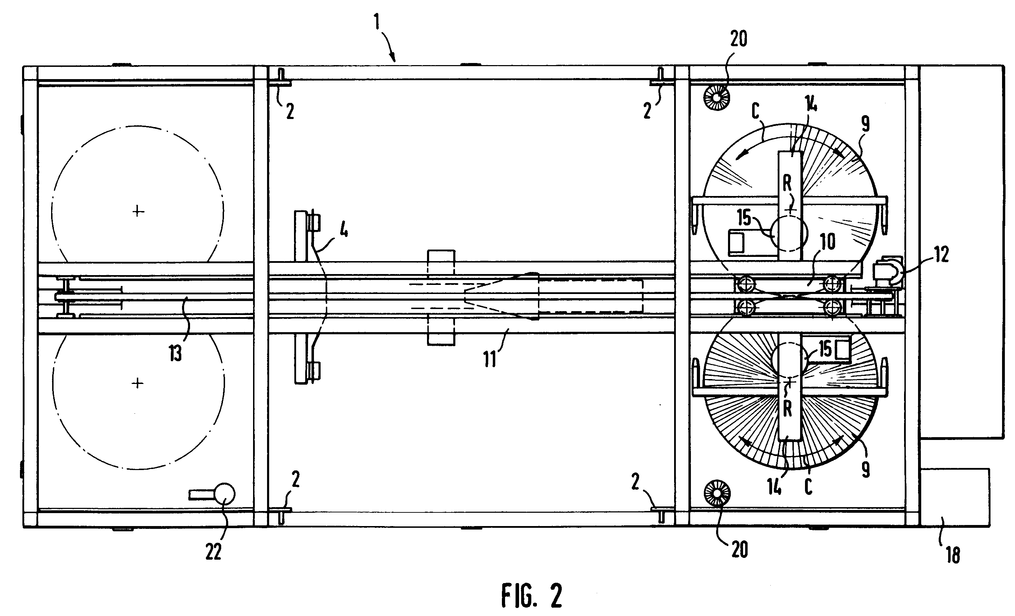

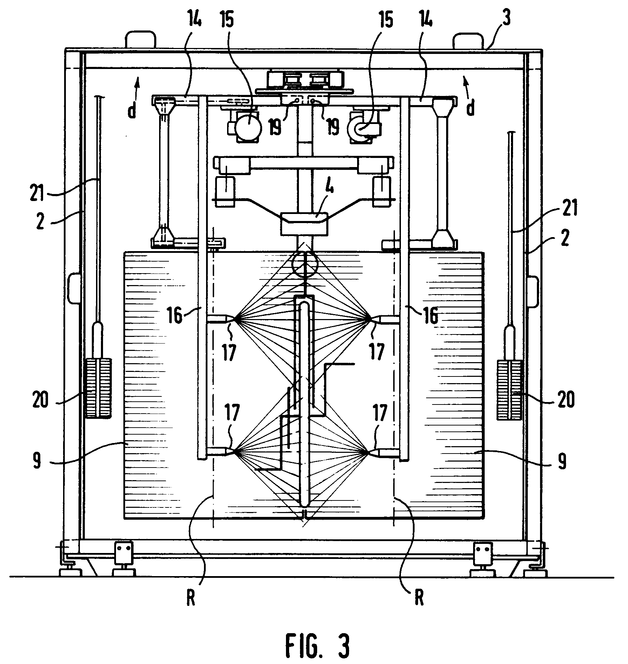

In Blickrichtung rechts neben dem Zweirad 4 ist die Reinigungseinrichtung 8 in ihrer Ausgangsstellung vor Beginn des Reinigungsvorganges positioniert. Die Reinigungseinrichtung 8 umfaßt zwei Reinigungswalzen 9 (siehe Fig. 2), die mittels eines Schlittens 10, der an einer Längsschiene 11 verschiebbar gelagert ist, seitlich am Fahrrad 4 bis in die Endstellung (in Figuren 1 und 2 strichpunktiert dargestellt) vorbeiführbar sind. Der Antrieb des Schlittens 10 erfolgt durch einen Motor 12 und eine Endloskette oder einen Endloszahnriemen 13 (in Fig. 1 strichpunktiert dargestellt). Die Reinigungswalzen 9 sind an Querträgern 14 endseitig befestigt. An den Querträgern 14 sind pro Reinigungswalze 9 ein Motor 15 angeordnet, der die Reinigungswalzen 9 über umgelenkte Ketten oder Zahnriemen (in Fig. 3 strichpunktiert dargestellt) um die Rotationsachsen R dreht (Pfeil C in Fig. 2). Beidseitig neben jeder Reinigungswalze 9 sind Sprüh- bzw. Trocknungseinrichtungen 16 angeordnet, die mittels Düsen 17 Waschflüssigkeit oder Heißluft zum Trocknen in Richtung des Fahrrades 4 sprühen oder blasen. Da sich die Sprüh- und Trocknungseinrichtungen 16 beidseitig jeder Reinigungswalze 9 befinden, sieht eine zweckmäßige Anordnung derselben derart aus, daß die in Verschieberichtung vor der Reinigungswalze 9 angeordneten Düsen 17 die Reinigungsflüssigkeit versprühen, welche eine Vorreinigung und gleichzeitig eine Befeuchtung der Reinigungswalzen bewirken. Die der Reinigungswalze 9 nachgeschalteten Düsen 17 werden als Trocknungsdüsen zum Blasen von Heißluft verwendet, so daß das zu reinigende Fahrrad 4 mit nur einem einmaligen Verschieben in Verschieberichtung vollständig gereinigt und getrocknet werden kann. Jedoch ist auch jedwede andere Verteilung bzw. Ansteuerung der Düsen möglich. Sowohl die Ansteuerung der Motoren 12 und 15 als auch der Sprüh- und Trocknungseinrichtungen 16 erfolgt automatisch mittels einer Schaltvorrichtung 18, an welcher sich auch weitere Parameter beispielsweise der Reinigungsflüssigkeit, der Geschwindigkeit od.dgl. einstellen lassen. Um zu verhindern, daß der Reinigungsvorgang bei geöffneten Schiebetüren 2 oder Dach 3 beginnt, kann die Schaltvorrichtung 18 mit an den Schiebetüren 2 oder dem Dach 3 angeordneten Sensoren (nicht dargestellt) verbunden sein, so daß die Schaltvorrichtung erst arbeitet, wenn die Kabine 1 vollständig geschlossen ist. Um den unterschiedlichen Breiten des zu reinigenden Fahrrades 4 begegnen zu können, ist jede Reinigungswalze 9 über an dem Schlitten 10 flexibel bzw. gelenkig gelagerte Querträger 14, an denen endseitig die Reinigungswalzen 9 befestigt sind, verschwenkbar. Dies erfolgt mittels einer Gelenkverbindung 19 derart, daß die Querträger 14 samt Reinigungswalzen 9 um die Anlenkachse in Richtung der Pfeile d verschwenkbar sind und sich so im Abstand den unterschiedlichen Breiten des Fahrrades 4 anpassen. Die Schwenklagerung kann jedoch auch über an der Verbindungsstelle der Reinigungswalzen 9 mit den Querträgern 14 angeordnete Gelenkverbindungen erfolgen, was sich beispielsweise einfachst durch eine Gummimuffenlagerung realisieren läßt.

Ferner sind in der Kabine beidseitig des Fahrrades 4 Handreinigungsgeräte 20, beispielsweise Bürsten, angeordnet. Die Handreinigungsgeräte 20 werden mittels des Schlauches 21 mit Waschflüssigkeit versorgt, die aus ihnen austritt, so daß mit den Handreinigungsgeräten 20 eine Nachreinigung, falls erforderlich, durchgeführt werden kann. Im Rahmen dieser Nachreinigung ist ferner noch ein Handtrocknungsgerät 22, beispielsweise ein Gebläse oder Fön, angeordnet, mit welchem dann die von Hand gereinigten Stellen getrocknet werden können, gleichermaßen können jedoch auch während des Hauptreinigungsvorganges nicht vollständig abgetrocknete Stellen nachgetrocknet werden.

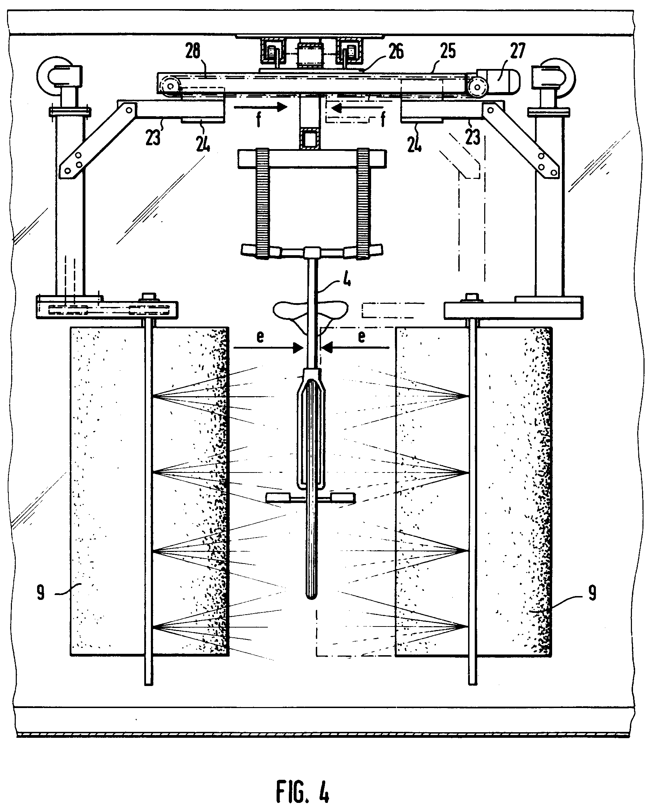

Fig. 4 zeigt eine weitere Ausführungsform der Reinigungseinrichtung, welche anstelle der flexiblen Schwenklagerung der Reinigungswalzen 9 am Schlitten 10 eine verschiebbare Lagerung der Reinigungswalzen 9 vorsieht. Die Reinigungswalzen 9 sind dabei mittels eines Trägers 23 an einem Querschlitten 24 befestigt. Der Querschlitten 24 wiederum ist an einer Querschiene 25 des Schlittens 26 befestigt. Die Verschiebung der Querschlitten 24 und damit der Reinigungswalzen 9 erfolgt mittels eines Motores 27 und einer Endloskette oder eines Endloszahnriemens 28 (in Fig. 4 strichpunktiert dargestellt). Auch die Steuerung des Motores 27 erfolgt über die Schaltvorrichtung 18. Je nachdem, wie breit das zu reinigende Fahrrad in dem momentan von den Reinigungswalzen 9 bearbeiteten Bereich ist, werden die Reinigungswalzen 9 durch Ansteuern des Motores 27 und der daraus folgenden Verschiebung der Schlitten 24 zusammen- oder auseinandergefahren (Pfeile e, f in Fig. 4), so daß sich der Abstand der Reinigungswalzen 9 entsprechend einstellen läßt.

Sowohl die schwenkbare Anordnung der Reinigungswalzen 9 an dem Schlitten 10 (Figuren 1 bis 3) als auch die verfahrbare Lagerung an eine Querschiene 25 des Schlittens 26 (Fig. 4) ist auch bei einer bodenseitigen Anordnung der Längsschiene 11 möglich, ebenso kann das zu reinigende Fahrrad 4 wahlweise an der Einhängevorrichtung hängend oder bodenseitig befestigt sein.

## Patentansprüche

1. Vorrichtung zum Reinigen eines Zweirades, insb. eines Fahrrades, mit einer das Zweirad wenigstens seitlich und oberhalb umschließenden Kabine, in der eine eine Sprüh- und/oder Trocknungseinrichtung beinhaltende Reinigungseinrichtung angeordnet ist, dadurch gekennzeichnet, daß die Reinigungseinrichtung (8) wenigstens zwei beidseitig des Zweirades (4) positionierte, rotierbare bürstenartige Reinigungswalzen (9) mit den Reinigungswalzen (9) zugeordneten Sprüh- und/oder Trocknungseinrichtungen (16) umfaßt, die gemeinsam mittels eines auf einer parallel zur Zweiradlängsachse verlaufenden Längsschiene (11) bewegbaren Schlittens (10, 26) seitlich entlang des Zweirades (4) verfahrbar sind.

2. Vorrichtung nach Anspruch 1, dadurch gekennzeichnet, daß die Längsschiene (11) oberhalb des Zweirades (4) verläuft, welches in einer in der Kabine (1) angeordneten Einhängevorrichtung (5) hängend angeordnet ist.

3. Vorrichtung nach Anspruch 1 oder 2, dadurch gekennzeichnet, daß die Sprüh- und/oder Trocknungseinrichtungen (16) beidseitig der Reinigungswalzen (9) angeordnet sind.

4. Vorrichtung nach einem der Ansprüche 1 bis 3, dadurch gekennzeichnet, daß die Reinigungswalzen (9) und/oder die Sprüh- und/oder Trocknungseinrichtungen (16) mit einer Gelenkverbindung (19) an dem Schlitten (10) angelenkt sind.

5. Vorrichtung nach einem der Ansprüche 1 bis 3, dadurch gekennzeichnet, daß die Reinigungswalzen (9) und/oder die Sprüh- und/oder Trocknungseinrichtungen (16) mittels auf einer Querschiene (25) des Schlittens (26) bewegbarer Querschlitten (24) senkrecht zur Bewegungsrichtung des Schlittens (26) verfahrbar sind.

6. Vorrichtung nach einem der vorangehenden Ansprüche, dadurch gekennzeichnet, daß in der Kabine (1) wenigstens ein Reinigungsflüssigkeit abgebendes Handreinigungsgerät (20), insb. eine Bürste, angeordnet ist.

7. Vorrichtung nach einem der vorangehenden Ansprüche, dadurch gekennzeichnet, daß in der Kabine (1) wenigstens ein Handtrocknungsgerät (22), insb. ein Gebläse, angeordnet ist.

8. Vorrichtung nach einem der vorangehenden Ansprüche, dadurch gekennzeichnet, daß wenigstens eine der Seitenwände der Kabine (1) vorzugsweise im mittleren Bereich eine Schiebetür (2) aufweist.

9. Vorrichtung nach einem der vorangehenden Ansprüche, dadurch gekennzeichnet, daß das Dach vorzugsweise im mittleren Bereich als Schiebedach (3) ausgebildet ist.

## Claims

1. Apparatus for cleaning a two-wheeled vehicle, in particular a bicycle, comprising a cabin enclosing the vehicle at least laterally and at the top, in which cabin a cleaning device comprising a spray and/or drying device is provided, characterised in that the cleaning device (8) comprises at least two rotary brush-like cleaning rollers (9) positioned on either side of the vehicle (4) and spray and/or drying devices associated with the cleaning rollers (9), which devices together are movable laterally along the vehicle (4) by means of a slide (10, 26) movable on a longitudinal rail (11) extending parallel to the vehicle longitudinal axis.

2. Apparatus according to claim 1, characterised in that the longitudinal rail (11) extends above the vehicle (4), which is suspended in a hanging device (5) disposed in the cabin (1).

3. Apparatus according to claim 1 or 2, characterised in that the spraying and/or drying devices (16) are disposed on either side of the cleaning rollers (9).

4. Apparatus according to one of claims 1 to 3, characterised in that the cleaning rollers (9) and/or the spraying and/or drying devices (16) are coupled by a link connection (19) to the slide (10).

5. Apparatus according to one of claims 1 to 3, characterised in that the cleaning rollers (9) and/or the spraying and/or drying devices (16) are movable perpendicular to the direction of motion of the slide (26) by means of transverse slides (24) movable on a cross-rail (25) of the slide (26).

6. Apparatus according to one of the preceding claims, characterised in that in the cabin (1) at least one hand cleaning device (20), in particular a brush, discharging cleaning fluid is provided.

7. Apparatus according to one of the preceding claims, characterised in that in the cabin (1) at least one hand drying device (22), in particular a blower, is provided.

8. Apparatus according to one of the preceding claims, characterised in that at least one of the side walls of the cabin (1) has a sliding door (2) preferably in the middle region.

9. Apparatus according to one of the preceding claims, characterised in that the roof is preferably formed as a sliding roof (3) preferably in the middle region.

## Revendications

1. Installation pour le nettoyage d'un véhicule à deux roues, notamment d'une bicyclette, comportant une cabine qui entoure le véhicule à deux roues, au moins latéralement et sur le dessus, et dans laquelle est placé un dispositif de nettoyage comprenant un dispositif d'aspersion et/ou de séchage, caractérisée en ce que le dispositif de nettoyage (8) comprend au moins deux rouleaux rotatifs de nettoyage (9), du genre brosse, positionnés de part et d'autre du véhicule à deux roues (4), et auxquels sont associés des dispositifs d'aspersion et/ou de séchage (16), ces ensembles pouvant être déplacés en commun latéralement le long du véhicule à deux roues (4), au moyen d'un chariot (10, 26) mobile sur un rail longitudinal (11) s'étendant parallèlement à l'axe longitudinal du véhicule à deux roues.

2. Installation selon la revendication 1, caractérisée en ce que le rail longitudinal (11) s'étend au-dessus du véhicule à deux roues (4), qui est suspendu à un dispositif de suspension (5) situé dans la cabine (1).

3. Installation selon la revendication 1 ou 2, caractérisée en ce que les dispositifs d'aspersion et/ou de séchage (16) sont placés de part et d'autre des rouleaux de nettoyage (9).

4. Installation selon l'une des revendications 1 à 3, caractérisée en ce que les rouleaux de nettoyage (9) et/ou les dispositifs d'aspersion et/ou de séchage (16) sont articulés sur le chariot (10) par l'intermédiaire d'une liaison articulée (19).

5. Installation selon l'une des revendications 1 à 3, caractérisée en ce que les rouleaux de nettoyage (9) et/ou les dispositifs d'aspersion et/ou de séchage (16) peuvent être déplacés perpendiculairement à la direction de déplacement du chariot (26), au moyen de chariots transversaux (24) mobiles sur un rail transversal (25) du chariot (26).

6. Installation selon l'une des revendications précédentes, caractérisée en ce que, dans la cabine (1), est disposé au moins un appareil de nettoyage manuel (20), notamment une brosse, délivrant du liquide de nettoyage.

7. Installation selon l'une des revendications précédentes, caractérisée en ce que, dans la cabine (1), est disposé au moins un appareil de séchage manuel (22), notamment un ventilateur.

8. Installation selon l'une des revendications précédentes, caractérisée en ce qu'au moins l'une des parois latérales de la cabine (1) présente, de préférence dans la zone centrale, une porte coulissante (2).

9. Installation selon l'une des revendications précédentes, caractérisée en ce que le toit est réalisé, de préférence dans la zone centrale, sous forme de toit coulissant (3).
